# EUROPÄISCHE PATENTSCHRIFT

(11) **EP 4 225 528 B1**
(45) Veröffentlichungstag und Bekanntmachung des Hinweises auf die Patenterteilung: **19.06.2024**
(21) Anmeldenummer: 21815892.1
(22) Anmeldetag: 13.09.2021
(51) Int. Cl.: B23K 26/12, B23K 26/142, B23K 26/14

(54) **SCHUTZTRICHTER FÜR EINE LASERVORRICHTUNG UND LASERVORRICHTUNG HIERFÜR**
PROTECTIVE HOUSING FOR A LASER DEVICE AND LASER DEVICE THEREFOR
TRÉMIE DE PROTECTION POUR UN DISPOSITIF LASER, ET DISPOSITIF LASER ASSOCIÉ

(30) Priorität: 05.10.2020 AT 508502020
(43) Veröffentlichungstag der Anmeldung: 16.08.2023
(73) Patentinhaber: Trotec Laser GmbH, 4614 Marchtrenk (AT)
(72) Erfinder: MOOSMANN, Jonas, 88690 Uhldingen-Mühlhofen (DE); SMIGANOVSKI, Stanislav, 88677 Markdorf (DE); PICHLER, Harald, 88142 Wasserburg (DE)
(86) Internationale Anmeldenummer: PCT/AT2021/060322
(87) Internationale Veröffentlichungsnummer: WO 2022/073046

(56) Entgegenhaltungen:
- DE-A1- 1 947 664
- DE-A1-102011 050 832
- US-A- 5 477 023
- US-A1- 2003 121 896
- US-A1- 2015 190 886

## Beschreibung

Die Erfindung betrifft einen Schutztrichter für eine Laservorrichtung und ein Galvo-Laser mit einem Schutztrichter, wie diese in den Ansprüchen 1 und 9 beschrieben sind.

Aus dem Stand der Technik sind bereits Laserbearbeitungsgeräte bekannt, bei denen eine Laserquelle über ein handgeführten Laserkopf von einem User auf das Werkstück aufgedrückt bzw. aufgelegt wird, worauf anschließend die Bearbeitung gestartet wird.

Beispielsweise ist aus der EP 3 315 241 B1 ein Laserbearbeitungsgerät zur Beschriftung der Oberfläche eines Werkstückes mittels eines Laserstrahls bekannt, bei dem ein Gerätekopf auf eine Werkstückoberfläche positioniert wird, wobei der Gerätekopf über Versorgungsleitungen, die über elektrische und fluidführende Leitungen verfügt, mit einer Basisstation verbunden ist. Am Gerätekopf ist eine Abdichthaube befestigt, die eine umlaufende Anlagekante zur Auflage auf die Werkstückoberfläche aufweist. Weiters ist eine Sicherheits-Kontaktelement am Gerätekopf angeordnet, die durch Andrücken der Abdichthaube an die Werkstückoberfläche betätigt, insbesondere aktiviert, wird, wodurch die Laserbearbeitung freigegeben wird. Weiters ist eine Gasversorgung vorgesehen, bei der eine erste und zweite Gaszuführung und eine Gasabführung vorgesehen ist.

Weiters ist aus der EP 2 564 977 B1 ein Laserbearbeitungsgerät, welches zur Bearbeitung der Oberfläche eines Werkstückes mittels eines Laserstrahls ausgebildet ist, bekannt, welches im Laserkopf eine Laser-Ablenkeinheit, die durch optische Elemente zur Fokussierung und/oder Schwenkung eines Laserstrahls gebildet ist, aufweist. Am Laserkopf ist wiederum eine Abdichthaube befestigt, die eine umlaufende Anlagekante für die Werkstückoberfläche aufweist, wobei zwischen dem Laserkopf und der Abdichthaube eine Verbindungseinheit angeordnet ist, welche die Sicherheits-Kontaktelemente und zum Teil die Gasführung umfasst.

Nachteilig ist bei den zuvor beschriebenen Systemen, dass eine spezielle Gasversorgung notwendig ist, was das Handling des Gerätekopfes einschränkt.

Die US 2015/190886 A1 beschreibt ein Laserbearbeitungssystem mit einem Schutztrichter, bei dem die Abdeckbleche des Schutztrichters über ein federelastisches Material, insbesondere Federblech, am Laserkopf befestigt sind. Die Abschirmbleche sind in einem Rechteck angeordnet, wobei jeweils zwei gegenüberliegende Abschirmbleche gleich ausgebildet sind. Zwei Abdeckbleche sind an ihren Seitenrändern abgekantet bzw. abgewinkelt ausgebildet, sodass zwischen zwei benachbarte Abdeckbleche ein Spalt gebildet wird, über dem Luft aus der Umgebung ins Innere des Schutztrichters oder Gase und Schmauch nach außen strömen kann. Weiters ist eine Crossjet-Düse und eine Absaugöffnung einer Absaugeinrichtung zum Erzeugen eines quer zur Bearbeitungsoptik verlaufende Luftquerströmung angeordnet. Die Abdeckbleche sind mit Dichtungselementen versehen, über die der Schutztrichter auf das Werkstück mit entsprechenden Federdruck gedrückt und zum Bearbeiten des Werkstückes der Laserkopf mit dem Schutztrichter verfahren wird. Nachteilig ist hierbei, dass der Schutztrichter keine Sicherheitselemente, insbesondere Kontaktelemente, aufweist, sodass eine Aktivierung des Lasers auch ohne aufgesetzten Schutztrichter auf dem Werkstück möglich ist.

Aus der DE 102011050832 A1 ist eine Vorrichtung zum Fügen von Werkstücken mittels Laserstrahlung bekannt, bei der die Laserschweiß-Vorrichtung in Form einer Schweißzange ausgebildet ist. Dabei sind an den oberen und unteren Schenkel der Schweißzange jeweils zwei Andruckelemente angeordnet, die gegen das Werkstück gepresst werden. Über eine Scanneroptik wird der Laserstrahl geführt und positioniert. Auch bei dieser Lösung kann der Laserstrahl ohne Werkstück aktiviert werden, da keine Sicherheits-Kontaktelemente an den Andruckelementen vorgesehen sind.

Weiters ist aus der US 2003/0121896 A1 eine Laserreinigungsvorrichtung bekannt, auf die der Laser samt Schutzgehäuse aufgesetzt wird. Hierbei wird Inert-Gas zum Entfernen organisches Material von der Oberfläche des Werkstückes durch die Laserreinigungsvorrichtung gefördert. Aus der US 5477023 A ist ein Laser-Gravier-System zum Erzeugen eines Bildes auf einem Werkstück bekannt. Hierbei wird der Laser über einen auf das Werkstück aufgesetzten Schutztrichter geschützt, wobei das Aufsetzen des Schutztrichters auf dem Werkstück mittels eines Mikro-Schalters überwacht wird.

In der DE 1947664 A1 ist eine Einrichtung zum Materialbearbeitung mittels Laserstrahlung bekannt, bei der zwischen der Bearbeitungsoptik und Werkstück ein Schutztrichter in Form zweier zueinander verschiebbarer Tubuse angeordnet ist, dessen Länge auf die Linsenebene gewählt und mittels einer Schraube befestigt werden kann. Weiters ist eine Absaugeinrichtung in Form eines Absaugstutzens angeordnet, mittels der die am bearbeitenden Werkstück abdampfenden Materialteilchen von der Optik bzw. Linse ferngehalten werden.

Die Aufgabe der Erfindung liegt darin, einen Schutztrichter und eine Laservorrichtung zu schaffen, bei dem einerseits die obgenannten Nachteile vermieden werden und andererseits die Bedienerfreundlichkeit erhöht wird.

Die Aufgabe wird durch die Erfindung gelöst.

Die Aufgabe der Erfindung wird durch einen Schutztrichter für eine Laservorrichtung gemäß Anspruch 1 gelöst.

Vorteilhaft ist hierbei, dass der User beim Tausch des Schutztrichters einfach eine Einstellung des Fokuspunktes manuell vornehmen kann. Damit können Schutztrichter mit unterschiedlichen Größen einfach eingesetzt werden. Auch ist es damit einfach, den Fokuspunkt auf das verwendete Material, insbesondere auf die Graviertiefe, einzustellen. Vorzugsweise ist dabei am Schutztrichter eine Skalar angebracht, sodass der User vorgegebene Werte einstellen kann.

Ein weiterer Vorteil liegt darin, dass dadurch die Laser-Ablenkeinheit kostengünstiger ausgeführt werden kann, da diese keine automatische Fokuspunkt-Einstellung, wie dies beim Stand der Technik notwendig ist, aufweisen muss, da der Fokuspunkt manuell eingestellt werden kann. Durch die Ausbildung, dass sich die Schutzabdeckung von dem Verbindungselement in Richtung des Sicherheits-Kontaktelementes erstreckt, wird erreicht, dass eine Längsverstellung des Führungsbereichs bzw. des Schutztrichters möglich ist.

Von Vorteil ist eine Ausbildung, bei der der Führungsbereich aus teleskopartig zueinander verschiebbaren Bauteilen gebildet ist, die vorzugsweise rechteck-förmig mit einem zentralen Hohlraum für den Laserstrahl ausgebildet sind. Dadurch wird erreicht, dass sichergestellt ist, dass ein Austritt des Laserstrahls aus dem Schutztrichter auch bei Verstellung der Elemente zueinander nicht möglich ist.

Es sind aber auch die Merkmale von Vorteil, bei denen das Sicherheits-Kontaktelement eine verschiebbare Kontaktplatte zum Kontaktieren mit dem Werkstück aufweist, wobei zwischen der Kontaktplatte und einer Halteplatte, die mit dem Führungsbereich verbunden ist, zumindest ein Sensor angeordnet ist. Dadurch wird erreicht, dass nur bei aufgesetztem Schutztrichter und somit bei aktivierten Sensoren eine Bearbeitung des Werkstückes möglich ist und somit keine abgelenkten oder reflektierten Laserstrahlen aus dem Schutztrichter austreten können.

Eine Ausbildung ist von Vorteil, bei der an einer Seitenfläche des Führungsbereiches ein Verstellelement, insbesondere Verstellrad, zum auseinander- oder zusammenschieben der Bauteile des Führungsbereiches angeordnet ist. Dadurch wird erreicht, dass somit die Länge des Schutztrichters und somit der Fokuspunkt des von der Laser-Ablenkeinheit am Laserkopf abgelenkten Laserstrahls verändert wird. Dadurch können auch bauliche Toleranzen am Schutztrichter einfach ausgeglichen werden, in dem über das Verstellrad der Fokuspunkt angepasst wird.

Es sind aber auch die Merkmale von Vorteil, bei dem am Führungsbereich eine Anzeigeelement zur Einstellung des Fokuspunktes angeordnet ist, welches über das Verstellelement einstellbar ist. Dadurch wird erreicht, dass User vorgegebene Einstellwerte für den Fokuspunkt bzw. der Länge des Schutztrichters schnell und übersichtlich einstellen kann. Hierbei ist es selbstverständlich möglich, dass anstelle eines manuellen Einstellrades bzw. Einstellelementes ein elektrisch betriebenes Einstellelement eingesetzt werden kann, um eine automatische Fokuspunkt bzw. Längenanpassung des Schutztrichters direkt von der Steuereinheit vornehmen zu können.

Von Vorteil ist die Ausbildung, bei denen im Bereich des Sicherheits-Kontaktelementes eine Absaugöffnung mit einem Absaugstutzen zum Befestigen eines Absaugschlauches angeordnet ist. Dadurch wird erreicht, dass unmittelbar im Bereich der Werkstückoberfläche eine Absaugung des durch den Laser erzeugten Rauches bzw. Abgases erfolgt und somit die optischen Bauelemente, insbesondere die Laser-Ablenkeinheit vor dem Rauch bzw. Abgas geschützt wird.

Um die teuren optischen Elemente, insbesondere die Laser-Ablenkeinheit, vor nicht vorhersehbare Spritzer oder Schmauchspuren zu schützen, ist es von Vorteil, wenn der Schutztrichter, insbesondere der Führungsbereich, eine gewisse Länge aufweist, sodass die Gase bzw. Spritzer nicht bis zu den optischen Elementen gelangen kann.

Von Vorteil ist auch eine Ausbildung, bei der an zwei gegenüberliegenden Seiten des Führungsbereichs jeweils eine Lufteintrittsöffnung und eine Schutzabdeckung angeordnet ist. Dadurch wird erreicht, dass die einströmende Luft einen konstanten Luftstrom im Bereich der Laser-Ablenkeinheit ausbildet, sodass kein Rauch bzw. Abgase oder Spritzer an die optischen Elemente der Laser-Ablenkeinheit gelangen kann. Gleichzeitig wird durch die Schutzabdeckung erreicht, dass die Länge des Schutztrichters zum Anpassen des Fokuspunktes verstellt werden kann, wobei sichergestellt ist, dass bei den Lufteintrittsöffnung kein Laserstrahl nach außen dringen kann, da dieser von der Schutzabdeckung abgehalten wird.

Von Vorteil sind auch die Ausbildungen, dass zwischen einer Außenfläche des Führungsbereiches und der Schutzabdeckung ein Eintrittskanal für die Luftzirkulation ausgebildet ist. Dadurch wird erreicht, dass auf einfache Art und Weise ein Luftzuführung zum Schutz der Laser-Ablenkeinheit realisiert wird. Gleichzeitig wird die Luft entlang des Führungsbereiches geführt, sodass hierdurch auch ein kühlender Effekt erzielt wird.

Es sind aber auch die Merkmale von Vorteil, bei denen das Verbindungselement mit einem Entriegelungstaster zum Schnellwechsel des Schutztrichters von einem Laserkopf einer Laservorrichtung, insbesondere eines Galvo-Lasers, ausgestattet ist. Damit wird erreicht, dass ein rascher und einfacher Tausch des gesamten Schutztrichters vorgenommen werden kann, wozu lediglich die Leitungen für die Sensoren und für die Luftabsaugung abgeschlossen und beim neuen bzw. anderen Schutztrichter wieder angeschlossen werden müssen. Anschließend kann eine manuelle Fokuspunkt-Einstellung des Schutztrichters auf einfache Art und Weise durchgeführt werden.

Die Erfindung wird anschließend in Form eines Ausführungsbeispiels beschrieben, wobei darauf hingewiesen wird, dass die Erfindung nicht auf das dargestellten und beschriebenen Ausführungsbeispiel bzw. Lösung begrenzt ist.

Es zeigen:
- Fig. 1: eine schaubildliche Darstellung einer Laservorrichtung mit befestigter Schutztrichter zum Bearbeiten eines Werkstückes mittels eines Laserprozesses, in vereinfachter, schematischer Darstellung;
- Fig. 2: eine andere schaubildliche Darstellung des Schutztrichters verbunden mit dem Laserkopf, in vereinfachter schematischer Darstellung;
- Fig. 3: eine Vorderansicht an den am Laserkopf befestigten Schutztrichter, in vereinfachter, schematischer Darstellung;
- Fig. 4: eine Schnittdarstellung durch den Schutztrichter, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

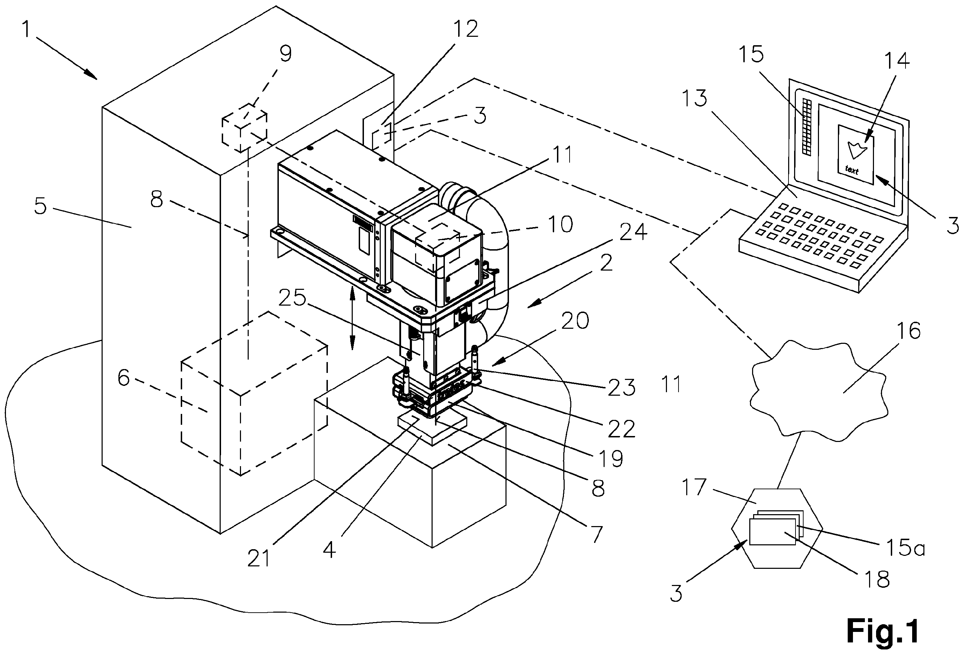

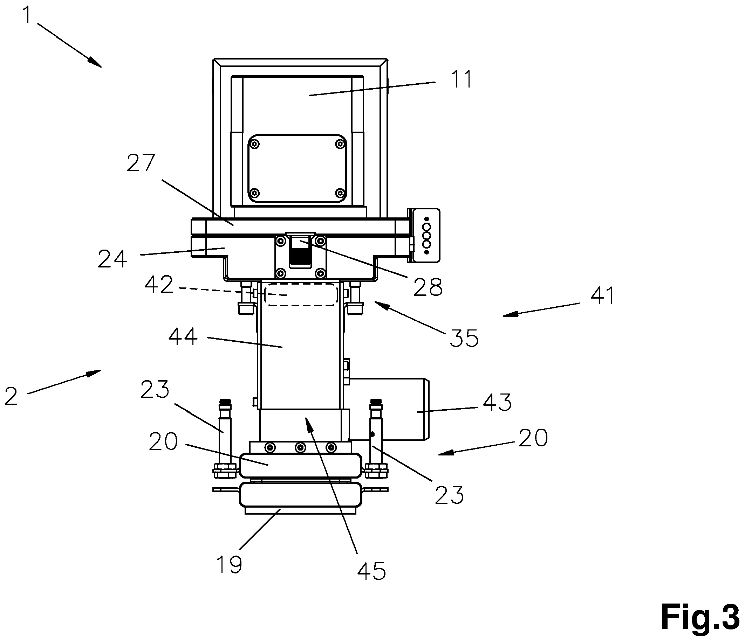

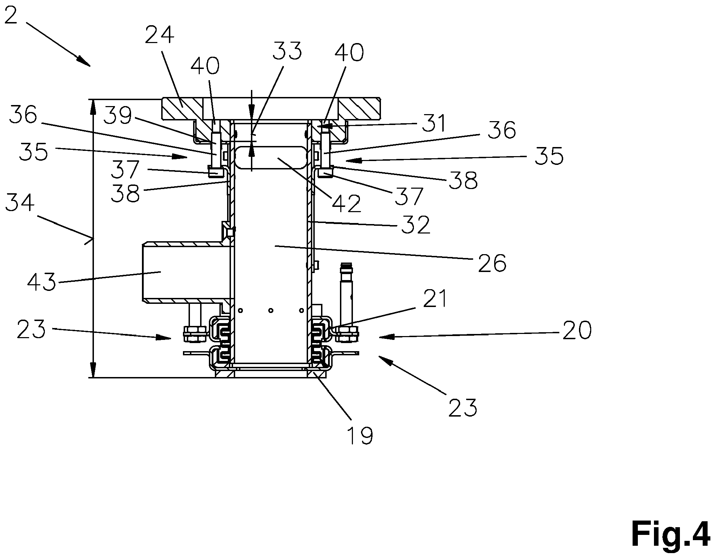

In den Fig. 1 bis 4 ist eine Laservorrichtung 1 mit einem Schutztrichter 2 zur Laser-Materialbearbeitung, insbesondere Laserbeschriftung, vorzugsweise durch Abarbeitung eines Jobs 3 für das Schneiden, Gravieren, Markieren und/oder Beschriften eines vorzugsweise flachen Werkstückes 4 gezeigt.

Gemäß Fig. 1 ist ein aus dem Stand der Technik bekannte Laservorrichtung 1 der Type Galvo-Laser dargestellt, bei dem in einem Gehäuse 5 zumindest eine Strahlenquellen 6 in Form eines Lasern 6 angeordnet und betrieben wird. Der Laser 6 wirkt dabei auf das zu bearbeitende Werkstück 4 ein, wobei das Werkstück 4 vorzugsweise auf einen Bearbeitungstisch 7 der Laservorrichtung 1 positioniert ist. Ein von der Strahlenquelle 6 abgegebener Laserstrahl 8, wie schematisch mit Punkt-Strichlierten Linien dargestellt, wird über Umlenkelemente 9 an zumindest eine Laser-Ablenkeinheit 10, die im Laserkopf 11 der Laservorrichtung 1 angeordnet ist, gesendet. Von der Laser-Ablenkeinheit 10 wird der Laserstrahl 8 in Richtung Werkstück 4 abgelenkt und positioniert, sodass eine Bearbeitung des Werkstückes 4 erfolgt. Die Steuerung, insbesondere die Positionssteuerung des Laserstrahls 8 am Werkstück 4, erfolgt über eine in einer Steuereinheit 12 laufende Software, wobei hierzu vorzugsweise von der Steuereinheit 12 entsprechend erstellte Jobs 3, in der die Daten, Parameter, insbesondere Positionsdaten, enthalten sind, verarbeitet werden.

Dabei können beispielsweise an einer externen Komponente 13, insbesondere einem Computer oder einem Steuergerät, eine Grafik 14 und/oder ein Text 14 über eine handelsübliche Software 15, wie beispielsweise Coral-Draw, Paint, usw., oder eine webbasierte Software 15a erstellt werden, welche anschließend in einem Job 3 umgewandelt wird und an die Steuereinheit 13 der Laservorrichtung 1 exportiert bzw. übergeben wird, die eine Konvertierung der übergebenen Daten, insbesondere der Grafik 14 und/oder des Textes 14, zum Steuern der einzelnen Elemente der Laservorrichtung 1 vornimmt. Vorzugsweise wird eine webbasierte Software 15a für die Erstellung des Jobs 3 eingesetzt, wobei hierzu die Komponente 13 oder direkt die Laservorrichtung 1 eine Verbindung mit einem Internet 16 und vorzugweise einer Cloud 17 herstellt. Anschließend kann über einen Browser die webbasierte Software 15a aufgerufen werden und die Konfiguration vorgenommen werden, sodass anschließend von der Software 15a der Job 3 erstellt wird. Dieser kann dabei in einer Job-Datenbank 18 in der Cloud 17 gespeichert werden, sodass dieser jederzeit von jedem beliebigen Standort auf der Welt aufgerufen werden kann. Dabei ist es auch möglich, dass direkt von der Job-Datenbank 18 ein Job 3 zur Bearbeitung mit dem Laservorrichtung 1 heruntergeladen wird, wobei dies über die externe Komponente 13 oder direkt von der Laservorrichtung 1 über dessen Steuer- / Anzeigeelemente, insbesondere Touch-Screen, durchgeführt wird, wozu die Laservorrichtung 1 eine Verbindung mit dem Internet 16 und weiters mit der Cloud 17 herstellt. Dabei ist es auch möglich, dass von der Externen Komponente 13 der Job 3 über das Internet 16 in die Datenbank 18 hochgeladen werden kann, um beispielsweise zu einem späteren Zeitpunkt die Bearbeitung des Jobs 3 vorzunehmen oder die Bearbeitung an einem anderen Standort durchzuführen. Nachdem die Daten, insbesondere der erstellte Job 3, an die Laservorrichtung 1 übertragen bzw. geladen ist, wird von der Laservorrichtung 1, insbesondere deren Steuerung 12, der Job 3 abgearbeitet. Dabei ist es auch möglich, dass mehrere Jobs 3 gleichzeitig in der Laservorrichtung 1 gespeichert und nacheinander abgearbeitet werden können.

Hierzu wird am Bearbeitungstisch 7 das Werkstück 4 positioniert, worauf der Schutztrichter 2, insbesondere der Laserkopf 11 mit dem daran befestigten Schutztrichter 2 derart verfahren wird, dass eine Kontaktplatte 19 eines Sicherheits-Kontaktelementes 20 auf einer Oberfläche 21 des Werkstückes 4 zum Anliegen kommt. Dadurch wird nunmehr zumindest ein zwischen einer Halteplatte 22 und der Kontaktplatte 19 angeordneter Sensor 23 aktiviert, der die Bearbeitung des Werkstückes 4 mit dem Laserstrahl 8 freigibt. D.h., dass zum Bearbeiten des Werkstückes 4, insbesondere der Oberfläche 21 des Werkstückes 4, der Laserkopf 11 mit dem daran Befestigten Schutztrichter 2 auf das Werkstück 4 aufgesetzt wird, worauf zumindest ein vorzugsweise zwei Sensoren 23 aktiviert wird, der die Bearbeitung des Werkstückes 4 vorzugsweise für einen Gravierprozesse, bei dem über dem Laserstrahl 8 Material von der Oberfläche 21 abgetragen wird, freigibt, sodass anschließend von der Steuereinheit 12 der Laserprozess zum Bearbeiten des Werkstückes 4 durch entsprechende Steuerung der Laser-Ablenkeinheit 10 durchführt. Für derartige Laserprozesse muss sichergestellt werden, dass ev. abgelenkte, insbesondere reflektierte, Laserstrahlen 8 nicht in die Umgebung abgestrahlt werden und ev. anwesende Personen zu Schaden kommen. Dies wird derart verhindert, in dem der Schutztrichter 2 mit dem Laserkopf 11 verbunden ist, in dem der Laserstrahl 8 geschützt verläuft.

Erfindungsgemäß ist der Schutztrichter 2 derart aufgebaut, dass dieser zumindest ein Verbindungselement 24 zum Verbinden mit dem Laserkopf 11 der Laservorrichtung 1, einen Führungsbereich 25, in dem der Laserstrahl 8 verläuft, und das Sicherheits-Kontaktelement 20, welches vorzugsweise am gegenüberliegenden Ende zum Verbindungselement 24 angeordnet ist, umfasst bzw. aufgebaut ist. Hierbei verläuft vorzugsweise im Zentrum des Schutztrichter 2 der Laserstrahl 8, der vom Laserkopf 11, insbesondere der Laser-Ablenkeinheit 10, in einem Hohlraum 26 des Schutztrichters 2, der sich über die Komponenten des Verbindungselementes 24, des Führungsbereichs 25 und des Sicherheits-Kontaktelements 20 erstreckt, verläuft und im Bereich des am Werkstück 4 aufgedrückten bzw. aufgepressten Kontaktplatte 19 des Sicherheits-Kontaktelementes 20 auf das Werkstück 4 auftrifft. Der Hohlraum 26 weist jene Größe auf, die der Bearbeitungsfläche am Werkstück 4 entspricht, sodass der Laserstrahl 8 ungehindert von der Laser-Ablenkeinheit 10 entsprechend abgelenkt werden kann.

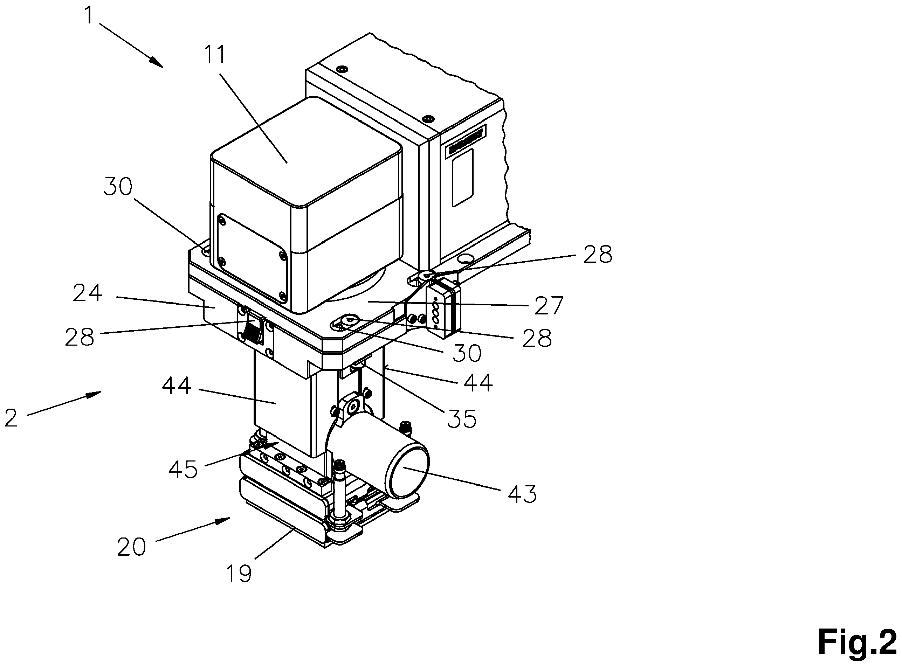

Wie besser aus Fig. 2 bis 4 ersichtlich ist der Schutztrichter 2 mit dem Verbindungselement 24 am Laserkopf 11 verbunden, wozu am Laserkopf 11 eine korrespondierende Verbindungsplatte 27 befestigt ist. Weiters ist ein Entriegelungstaster 28 vorzugsweise an der Vorderseite des Schutztrichters 2 angeordnet, der das Verbindungselement 24 und die Verbindungsplatte 27 miteinander verbindet bzw. zusammenhält. Um den Schutztrichter 2 von dem Laserkopf 11 zu lösen, ist es notwendig, dass zuerst der Entriegelungstaster 28 betätigt wird, sodass dieser außer Eingriff mit der Verbindungsplatte 27 kommt, worauf der Schutztrichter 2 beispielsweise horizontal nach vorne verschoben wird, bis Halteelemente 29 frei liegen und der Schutztrichter 2 samt der Halteelemente 29 vertikal, insbesondere nach unten, verschoben wird, wodurch die Halteelemente 29 außer Eingriff mit der Verbindungsplatte 27 kommen und somit der Schutztrichter 2 nicht mehr mit dem Laserkopf 11 verbunden ist.

Zum Verbinden des Schutztrichters 2 mit dem Laserkopf 11 werden die Halteelemente 29 in Positionieröffnungen 30 in der Verbindungsplatte 27 eingeführt, worauf anschließend wieder eine horizontale Verschiebung des Schutztrichters 2 durchgeführt wird und damit die Haltelemente 29 mit der Verbindungsplatte 27 in Eingriff kommen, sodass anschließend der Entriegelungstaster 28 geschlossen werden kann und somit der Schutztrichter 2 am Laserkopf 11 befestigt und verriegelt ist. Selbstverständlich ist es möglich, dass auch andere Schnell-Wechsel-System eingesetzt werden können, die eine einfache und sichere Verbindung des Schutztrichters 2 mit dem Laserkopf 11 ermöglichen.

Das Verbindungselement 24 dient weiters als Führungskörper 31 für den Führungsbereich 25, d.h., dass ein Gehäuse 32 des Führungsbereiches 25 innerhalb des Verbindungselementes 24 entlang eines Verstellbereiches 33 verschoben werden kann, wodurch die Gesamtlänge 34 des Schutztrichters 2 verstellt wird. Dadurch wird erreicht, dass aufgrund einer Änderung der Gesamtlänge 34 automatisch der Fokuspunkt des Laser 8 bzw. Laserstrahls 8 verändert wird, da bei der Bearbeitung eines Werkstückes 4 der Schutztrichter 2 mit der Kontaktplatte 19 am Werkstück 4, insbesondere an der Oberfläche 21 des Werkstückes 4, aufliegt, sodass automatisch der Fokuspunkt bei veränderter Gesamtlängen 34 des Schutztrichters 2 verändert wird.

Im gezeigten Ausführungsbeispiel dient die Verbindungsplatte 27 gleichzeitig zur Schnellverbindung mit dem Laserkopf 11 und als Führungskörper 31 des Führungsbereichs 25, wobei jedoch auch eine Ausbildung möglich ist, bei der der Führungsbereich 25 aus teleskopartig zueinander verschiebare Bauteilen, insbesondere zwei ineinander verschiebbare Gehäuse 32, gebildet ist, die vorzugsweise rechteck-förmig mit zentralen Hohlraum 26 für den Laserstrahl 8 ausgebildet sind.

Damit eine Verstellung der Gesamtlänge 34 und somit des Fokuspunktes des Laserstrahls 8 vorgenommen werden kann, ist der Führungsbereich 25 mit zumindest einem vorzugsweise zwei Verstellelemente 35 versehen. Die Verstellelemente 35 sind im gezeigten Ausführungsbeispiel als Verstellschrauben 36 ausgebildet, wobei dabei der Schraubenkopf 37 über einen Mitnehmerwinkel 38 am Gehäuse 32 verbunden ist und der gegenüberliegende Bereich des Schraubenschaftes 39 in eine mit einem Gewinde ausgebildeten Bohrung 40 im Verbindungselement 24 befestigt ist, sodass durch Drehen des Verstellelementes 35, insbesondere der Verstellschraube 36, diese mehr oder weniger in die Bohrung 40 eingeschraubt wird, wobei bei einer Drehbewegung des Verstellelementes 35 das Gehäuse 32 über den Mitnehmerwinkel 37 ebenfalls innerhalb des Verstellbereichs 33 verschoben wird. Vorzugsweise werden die Verstellelemente 35 an jenen Seitenflächen des Führungsbereiches 25 angeordnet, an denen keine Luftleitöffnungen im Gehäuse 32 angeordnet sind. Um eine einfache Einstellung für die unterschiedlichsten Lasertypen bzw. Laserprozesse vornehmen zu können, ist es möglich, dass ein Anzeigeelement (nicht dargestellt) vorgesehen ist, sodass durch Drehen der Verstellelemente 35 der entsprechende Wert abgelesen werden kann. Damit kann der Nutzer einfach bei vorgegebenen Fokuspunkte diese Werte einstellen.

Weiters ist der Schutztrichter 2 mit einem Luftleitsystem 41 ausgestattet, das aus zumindest einem, vorzugsweise zwei Lufteintrittsöffnungen 42 und einem Luftaustrittsöffnungen 43 gebildet ist. Die Lufteintrittsöffnungen 42 sind dabei unterhalb des Verbindungselementes 24 an einer, vorzugsweise zwei gegenüberliegenden Seitenflächen des Gehäuses 32 des Führungsbereichs 25 angeordnet, wogegen die Luftaustrittsöffnung 43 am gegenüberliegenden Ende des Gehäuses 32 vorzugsweise unmittelbar oberhalb des Sicherheits-Kontaktelementes 20 angeordnet ist. Damit strömt die Luft unterhalb des Verbindungselementes 24, also unterhalb der Laser-Ablenkeinheit 10, in den Hohlraum 26 für den Laserstrahl 8 ein und wird über eine Absauganlage (nicht dargestellt) durch den Hohlraum 26 zur Luftaustrittsöffnung 43 und von dort nach außen abgesagt. Durch die Ausbildung eines derartigen Luftstroms im Hohlraum 26 wird erreicht, dass ev. beim Laserprozess entstehende Spritzer oder Abgase bzw. Rauch nicht an die empfindlichen optischen Elemente der Laser-Ablenkeinheit 11 gelangen können, da diese über den Luftstrom gebremst und entsprechend abtransportiert werden.

Dabei ist bei dem erfindungsgemäßen Schutztrichter 2 darauf zu achten, dass keinerlei reflektierte Laserstrahlen 8 aus dem Luftleitsystem 41 austreten können, sodass sich in der Nähe befindende Personen verletzt werden können. Erfindungsgemäß ist hierzu an den Gehäuse 32 des Führungsbereiches 25 eine Schutzabdeckung 44 vorgesehen, die auf der Außenseite des Gehäuses 32 angeordnet ist und zwischen der Schutzabdeckung 44 und dem Gehäuse 32 ein Luftkanal 45 ausgebildet ist, sodass die Luft unterhalb der Schutzabdeckung 44 zwischen dem Gehäuse 32 und der Schutzabdeckung 44 eingesaugt wird, worauf diese entlang des Gehäuses 32 bis zur Lufteintrittsöffnung 42 strömt und anschließend über die Lufteintrittsöffnung 42 in den Hohlraum 26 und von diesem über den Luftaustrittskanal 43 nach außen gesaugt wird. Damit wird erreicht, dass trotz Verstellung der Gesamtlänge 34 des Schutztrichters 2 sichergestellt ist, dass keine reflektierten Laserstrahlen 8 aus den Lufteintrittsöffnungen 42 und den Luftaustrittsöffnungen 43, diese ist über einen Schlauch mit der Absauganlage verbunden, austreten können. Weiters tritt durch das Entlangströmen der angesaugten Umgebungsluft am Gehäuse 32 ein Kühlungseffekt auf.

Der vollständigkeitshalber wird erwähnt, dass die Sensoren 23 über Leitungen (nicht dargestellt) mit der Steuereinheit 12 verbunden wird, damit beim Aktivieren der Sensoren 23, dies geschieht durch das Aufdrücken des Schutztrichters 2 auf die Oberfläche 21 des Werkstückes 4, wodurch die Kontaktplatte 19 in Richtung Halteplatte 22 verschoben wird und sich somit die Sensorelemente berühren, die Steuereinheit 12 die Berührung erkennen kann und den Laserprozess freigeben kann.

Der Ordnung halber sei abschließend darauf hingewiesen, dass zum besseren Verständnis des Aufbaus des Gravurablaufes 1 und deren Komponenten bzw. dessen Bestandteile teilweise unmaßstäblich und/oder vergrößert und/oder verkleinert und vor allem nur schematisch dargestellt wurden.

## Patentansprüche

1. Schutztrichter (2) für eine Laservorrichtung (1) in Form eines Galvo-Laser, umfassend zumindest ein Verbindungselement (24) zum Verbinden mit einem Laserkopf (11) der Laservorrichtung (1), einen Führungsbereich (25) und ein Sicherheits-Kontaktelement (20), welches vorzugsweise am gegenüberliegenden Ende zum Verbindungselement (24) angeordnet ist, wobei der Führungsbereich (25) zum Einstellen einer Gesamtlänge (34) des Schutztrichters (2) für das Ändern eines Fokuspunktes eines Lasers ausgebildet ist und der Führungsbereich (25) zumindest eine Schutzabdeckung (44) für eine Lufteintrittsöffnung (42), die im Bereich des Verbindungselementes (24) angeordnet ist, zum Schutz vor dem Austritt eines Laserstrahls (8) aus der Lufteintrittsöffnung (42) aufweist, wobei sich die Schutzabdeckung (44) von dem Verbindungselement (24) in Richtung des Sicherheits-Kontaktelementes (20) erstreckt, **dadurch gekennzeichnet, dass** das Sicherheits-Kontaktelement (20) eine verschiebbare Kontaktplatte (19) zum Kontaktieren mit dem Werkstück (4) aufweist, wobei zwischen der Kontaktplatte (19) und einer Halteplatte (22), die mit dem Führungsbereich (25) verbunden ist, zumindest ein Sensor (23), der zur Freigabe der Bearbeitung des Werkstückes (4) mit dem Laserstrahl (8) ausgebildet ist, angeordnet ist.

2. Schutztrichter (2) nach Anspruch 1, **dadurch gekennzeichnet, dass** der Führungsbereich (25) aus teleskopartig zueinander verschiebare Bauteilen gebildet ist, die vorzugsweise rechteck-förmig mit einem zentralen Hohlraum (26) für den Laserstrahl (8) ausgebildet sind.

3. Schutztrichter (2) nach Anspruch 1 oder 2, **dadurch gekennzeichnet, dass** an einer Seitenfläche des Führungsbereiches (25) ein Verstellelement (35), insbesondere Verstellrad bzw. Verstellschraube (36), zum auseinander- oder zusammenschieben der Bauteile, insbesondere des Gehäuses (32) des Führungsbereiches (25) angeordnet ist.

4. Schutztrichter (2) nach einem der vorhergehenden Ansprüche, **dadurch gekennzeichnet, dass** am Führungsbereich (35) eine Anzeigeelement zur Einstellung des Fokuspunktes angeordnet ist, welches über das Verstellelement (35) einstellbar ist.

5. Schutztrichter (2) nach einem der vorhergehenden Ansprüche, **dadurch gekennzeichnet, dass** im Bereich des Sicherheits-Kontaktelementes (20) eine Absaugöffnung bzw. Luftaustrittsöffnung (43) mit einem Absaugstutzen zum Befestigen eines Absaugschlauches angeordnet ist.

6. Schutztrichter (2) nach einem der vorhergehenden Ansprüche, **dadurch gekennzeichnet, dass** an zwei gegenüberliegenden Seiten des Führungsbereichs (25) jeweils eine Lufteintrittsöffnung (42) und eine Schutzabdeckung (44) angeordnet ist.

7. Schutztrichter (2) nach einem der vorhergehenden Ansprüche, **dadurch gekennzeichnet, dass** zwischen einer Außenfläche des Führungsbereiches (25) und der Schutzabdeckung (44) ein Eintrittskanal bzw. Luftkanal (45) für die Luftzirkulation ausgebildet ist.

8. Schutztrichter (2) nach einem der vorhergehenden Ansprüche, **dadurch gekennzeichnet, dass** das Verbindungselement (24) mit einem Entriegelungstaster (28) zum Schnellwechsel des Schutztrichters (2) von einem Laserkopf (11) einer Laservorrichtung (1), insbesondere eines Galvo-Lasers, ausgestattet ist.

9. Galvo-Laser (1) mit einem Schutztrichter (2) nach einem der vorhergehenden Ansprüche 1 bis 8 zur Laser-Materialbearbeitung, insbesondere Laserbeschriftung, vorzugsweise durch Abarbeitung eines Jobs (3) für das Schneiden, Gravieren, Markieren und/oder Beschriften eines vorzugsweise flachen Werkstückes (4), wobei der Schutztrichter (2) mit einem Laserkopf (11) des Galvo-Lasers verbunden ist und im Laserkopf (11) eine Laser-Ablenkeinheit (10) angeordnet ist, wobei ein Laserstrahl (8) von einer Strahlenquelle (6), insbesondere einem Laser (6), über Umlenkelementen (9) zur Laser-Ablenkeinheit (10) zuführbar ist, wobei der Schutztrichter (2) mit einer Luftleitsystem (41) zum Abführen eines im Hohlraum (26) durch die Bearbeitung des Werkstückes (4) mit dem Laserstrahl (8) entstehenden Gases bzw. Rauches versehen ist.

## Claims

1. Protective funnel (2) for a laser device (1) in the form of a galvo laser, comprising at least one connecting element (24) for connection to a laser head (11) of the laser device (1), a guide region (25) and a safety contact element (20), which is preferably arranged at the opposite end to the connecting element (24), wherein the guide region (25) is designed for adjusting an overall length (34) of the protective funnel (2) for changing a focal point of a laser and the guide region (25) has at least one protective cover (44) for an air inlet opening (42), which is arranged in the region of the connecting element (24), for protection against the exit of a laser beam (8) from the air inlet opening (42), wherein the protective cover (44) extends from the connecting element (24) in the direction of the safety contact element (20), **characterized in that** the safety contact element (20) has a displaceable contact plate (19) for making contact with the workpiece (4), wherein between the contact plate (19) and a holding plate (22), which is connected to the guide region (25), at least one sensor (23) is arranged, which is designed to release the processing of the workpiece (4) with the laser beam (8).

2. Protective funnel (2) according to claim 1, **characterized in that** the guide region (25) is formed from components which are telescopically displaceable relative to one another and are preferably rectangular in shape with a central cavity (26) for the laser beam (8).

3. Protective funnel (2) according to claim 1 or 2, **characterized in that** an adjusting element (35), in particular an adjusting wheel or adjusting screw (36), respectively, is arranged on a side face of the guide region (25) for pushing the components, in particular the housing (32) of the guide region (25), apart or together.

4. Protective funnel (2) according to any one of the preceding claims, **characterized in that** an indicator element for setting the focus point is arranged on the guide region (35), which indicator element can be set via the adjusting element (35).

5. Protective funnel (2) according to any one of the preceding claims, **characterized in that** an extraction opening or air outlet opening (43), respectively, with a suction nozzle for fastening an extraction hose is arranged in the region of the safety contact element (20).

6. Protective funnel (2) according to any one of the preceding claims, **characterized in that** on either of two opposite sides of the guide region (25) both an air inlet opening (42) and a protective cover (44) are arranged.

7. Protective funnel (2) according to any one of the preceding claims, **characterized in that** an inlet channel or air channel (45) for air circulation, respectively, is formed between an outer surface of the guide region (25) and the protective cover (44).

8. Protective funnel (2) according to any one of the preceding claims, **characterized in that** the connecting element (24) is equipped with an unlocking button (28) for quick change of the protective funnel (2) from a laser head (11) of a laser device (1), in particular a galvo laser.

9. Galvo laser (1) with a protective funnel (2) according to any one of the preceding claims 1 to 8 for laser material processing, in particular laser lettering, preferably by processing a job (3) for cutting, engraving, marking and/or lettering a preferably flat workpiece (4), wherein the protective funnel (2) is connected to a laser head (11) of the galvo laser and a laser deflection unit (10) is arranged in the laser head (11), wherein a laser beam (8) can be fed from a beam source (6), in particular a laser (6), to the laser deflection unit (10) via deflection elements (9), wherein the protective funnel (2) is provided with an air guiding system (41) for discharging a gas or fume, respectively, that is produced in the cavity (26) by the processing of the workpiece (4) with the laser beam (8).

## Revendications

1. Cône de protection (2) pour un dispositif laser (1) sous la forme d'un système galvo, comprenant au moins un élément de raccordement (24) pour le raccordement à une tête laser (11) du dispositif laser (1), une zone de guidage (25) et un élément de contact de sécurité (20), disposé de préférence à l'extrémité opposée à l'élément de raccordement (24), la zone de guidage (25) étant conçue pour le réglage d'une longueur totale (34) du cône de protection (2) pour la modification d'un point de focalisation d'un laser et la zone de guidage (25) comportant au moins un couvercle de protection (44) pour un orifice d'admission d'air (42), disposé dans la zone de l'élément de raccordement (24), pour la protection contre la sortie d'un faisceau laser (8) à travers l'orifice d'admission d'air (42), le couvercle de protection (44) s'étendant de l'élément de raccordement (24) en direction de l'élément de contact de sécurité (20), **caractérisé en ce que** l'élément de contact de sécurité (20) comporte une plaque de contact (19) coulissante pour la mise en contact avec la pièce à usiner (4), au moins un capteur (23), conçu pour autoriser le traitement de la pièce à usiner (4) avec le faisceau laser (8), étant disposé entre la plaque de contact (19) et une plaque de retenue (22), qui est reliée à la zone de guidage (25).

2. Cône de protection (2) selon la revendication 1, **caractérisé en ce que** la zone de guidage (25) est constituée de composants pouvant être déplacés de manière télescopique les uns par rapport aux autres, de préférence de forme rectangulaire avec une cavité centrale (26) pour le faisceau laser (8).

3. Cône de protection (2) selon la revendication 1 ou 2, **caractérisé en ce qu'**un élément de réglage (35), en particulier une roue de réglage ou vis de réglage (36), est disposé sur une surface latérale de la zone de guidage (25) afin d'écarter ou de rapprocher les composants, en particulier le boîtier (32) de la zone de guidage (25).

4. Cône de protection (2) selon l'une des revendications précédentes, **caractérisé en ce qu'**un élément d'affichage pour le réglage du point de focalisation est disposé sur la zone de guidage (35), lequel pouvant être réglé par le biais de l'élément de réglage (35).

5. Cône de protection (2) selon l'une des revendications précédentes, **caractérisé en ce qu'**un orifice d'aspiration ou orifice de sortie d'air (43) est disposé dans la zone de l'élément de contact de sécurité (20) avec une tubulure d'aspiration pour la fixation d'un tuyau souple d'aspiration.

6. Cône de protection (2) selon l'une des revendications précédentes, **caractérisé en ce qu'**un orifice d'admission d'air (42) et un couvercle de protection (44) sont disposés respectivement sur deux côtés opposés de la zone de guidage (25).

7. Cône de protection (2) selon l'une des revendications précédentes, **caractérisé en ce qu'**un canal d'admission ou canal d'air (45) est formé pour la circulation de l'air entre une surface extérieure de la zone de guidage (25) et le couvercle de protection (44).

8. Cône de protection (2) selon l'une des revendications précédentes, **caractérisé en ce que** l'élément de raccordement (24) est équipé d'un bouton de déverrouillage (28) pour le changement rapide du cône de protection (2) d'une tête laser (11) d'un dispositif laser (1), notamment d'un système galvo.

9. Système galvo (1) avec un cône de protection (2) selon l'une des revendications précédentes 1 à 8 pour le traitement laser de matériaux, en particulier l'inscription au laser, de préférence par l'exécution d'une tâche (3) de découpe, de gravure, de marquage et/ou d'inscription d'une pièce à usiner (4) de préférence plane, le cône de protection (2) étant relié à une tête laser (11) du système galvo, et une unité de déviation laser (10) étant disposée dans la tête laser (11), un faisceau laser (8) pouvant être acheminé d'une source de rayonnement (6), en particulier d'un laser (6), vers l'unité de déviation laser (10) par le biais d'éléments de déviation (9), le cône de protection (2) étant équipé d'un système de guidage d'air (41) pour l'évacuation de gaz ou de fumées produits dans la cavité (26) suite au traitement de la pièce à usiner (4) avec le faisceau laser (8).
